(19) **Europäisches Patentamt**
**European Patent Office**
**Office européen des brevets**

(11) **EP 3 048 842 B1**

(12) **EUROPEAN PATENT SPECIFICATION**

(45) Date of publication and mention
of the grant of the patent:
**22.04.2020 Bulletin 2020/17**

(51) Int Cl.:
**H04L 27/26** *(2006.01)*          **H04W 56/00** *(2009.01)*

(21) Application number: **16152460.8**

(22) Date of filing: **22.01.2016**

(54) **SENDING METHOD AND DEVICE**

SENDEVERFAHREN UND -VORRICHTUNG

PROCÉDÉ ET DISPOSITIF D'ENVOI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.01.2015 CN 201510033731**

(43) Date of publication of application:
**27.07.2016 Bulletin 2016/30**

(73) Proprietor: **ZTE Corporation
Shenzhen, Guangdong 518057 (CN)**

(72) Inventors:
  • **Hongfeng, YUAN
    518057 Shenzhen (CN)**

  • **Jie, LI
    518057 Shenzhen (CN)**
  • **Wenfeng, ZHANG
    518057 Shenzhen (CN)**

(74) Representative: **Novagraaf Technologies
Bâtiment O2
2, rue Sarah Bernhardt
CS90017
92665 Asnières-sur-Seine Cedex (FR)**

(56) References cited:
  **EP-A1- 1 892 865     WO-A1-2015/058539**

## Description

### Technical Field

The present disclosure relates to the field of communication, and in particular to a sending method and device.

### Background

Synchronization signal detection is required before synchronization is established between a system side and User Equipment (UE) in wireless communication. A synchronization signal is required to have characteristics of higher self-correlation and lower cross-correlation, so that the UE can be ensured to access a base station under the condition of low Signal to Interference plus Noise Ratio (SINR). When synchronization signals are designed, a primary synchronization signal and a secondary synchronization signal are generally designed. The primary synchronization signal is used for rough synchronization, and the secondary synchronization signal is used for accurately determining a frame synchronization location. At present, when a base station sends signals, synchronization signals and some signals other than the synchronization signals are processed together on line, and the sending manner of the synchronization signals is relatively undiversified.

For the problem of relatively undiversified signal sending manner in a related technology, there is yet no effective solution. EP1892865A1 and WO2015058539A1 provide related technical solutions; however, the above mentioned problem still remains unsolved

### Summary

The embodiments of the present disclosure provide a sending method and device, so as to at least solve the problem of relatively undiversified signal sending manner in the related technology. The invention is defined according to independent claims 1, 4 and 7. By virtue of the above technical solution, the problem of relatively undiversified signal sending manner in the related technology is solved, and diversified sending manners are implemented.

### Brief Description of the Drawings

Drawings described here are adopted to provide further understanding of the present disclosure, and form a part of the present disclosure. Schematic embodiments of the present disclosure and description thereof are adopted to explain the present disclosure, and do not form improper limits to the present disclosure. In the drawings:

Fig. 1 is a flowchart of a sending method according to an embodiment of the present disclosure;
Fig. 2 is a block diagram of a sending device according to an embodiment of the present disclosure;
Fig. 3 is a first block diagram of a sending device according to an example embodiment of the present disclosure;
Fig. 4 is a second block diagram of a sending device according to an example embodiment of the present disclosure;
Fig. 5 is a third block diagram of a sending device according to an example embodiment of the present disclosure;
Fig. 6 is a fourth block diagram of a sending device according to an example embodiment of the present disclosure; and
Fig. 7 is a flowchart of sending a primary synchronization signal in the Long Term Evolution (LTE) according to an embodiment of the present disclosure;
Fig. 8 is a diagram showing a hardware implementation of the sending method using a general purpose computing device and program codes according to embodiment 3 of the present disclosure;
Fig. 9 is a diagram showing another hardware implementation of the sending method according to an embodiment of the present disclosure.

### Detailed Description of the Embodiments

The present disclosure is described below with reference to the drawings and the embodiments in detail. It is important to note that the embodiments in the present disclosure and characteristics in the embodiments may be combined under the condition of no conflicts.

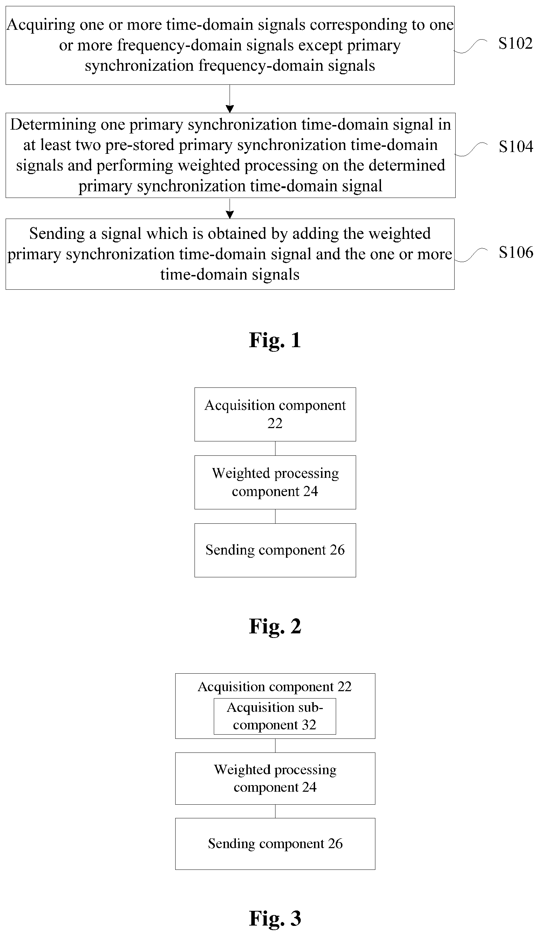

An embodiment provides a sending method. Fig. 1 is a flowchart of a sending method according to an embodiment of the present disclosure. As shown in Fig. 1, the flow may include the following steps S102 to S106.

Step S102: one or more time-domain signals corresponding to one or more frequency-domain signals except primary synchronization frequency-domain signals may be acquired.

There may be many manners for acquiring the one or more time-domain signals corresponding to the one or more frequency-domain signals except the primary synchronization frequency-domain signals. In one embodiment, the one or more frequency-domain signals except the primary synchronization frequency-domain signals may be generated, and the one or more time-domain signals may be acquired by converting the generated one or more frequency-domain signals. During practical application, in order to improve the applicability of the method, the one or more physical time-domain signals except the primary synchronization signals may be generated according to a 3GPP LTE protocol, wherein the time-domain signal may include a Cyclic Prefix (CP) part, or may not include a CP part.

Step S104: one primary synchronization time-domain signal may be determined in at least two pre-stored primary synchronization time-domain signals and weighted processing is performed on the determined primary synchronization time-domain signal.

There may be many manners for determining one primary synchronization time-domain signal in the at least two pre-stored primary synchronization time-domain signals. In an embodiment, one primary synchronization time-domain signal may be selected from the at least two pre-stored primary synchronization time-domain signals according to a cell ID.

A corresponding relationship for selecting the local primary synchronization signal according to the cell ID may be as follows: $N_{ID}^{(2)}$ may be calculated according to the cell ID, $N_{ID}^{cell} = 3N_{ID}^{(1)} + N_{ID}^{(2)}$, a root sequence u may be determined according to $N_{ID}^{(2)}$, then the primary synchronization signal time-domain sequence may be determined, as shown in Table 1.

Table 1

| $N_{ID}^{(2)}$ | Root index $u$ |
|---|---|
| 0 | 25 |
| 1 | 29 |
| 2 | 34 |

There may be many manners for performing the power and phase weighted processing on the selected primary synchronization time-domain signal. In an embodiment, the selected primary synchronization time-domain signal may be multiplied by a complex number to regulate power of the primary synchronization time-domain signal and an initial phase of the primary synchronization time-domain signal. A specific implementation is described below.

The power and phase weighted processing performed on the synchronization signal may refer to performing complex multiplication of a weight factor of the synchronization signal and the synchronization signal. w represents the weight factor, and w for different sending antennae may be different. In an embodiment, weighted processing may be performed by virtue of a formula as follows: $t_u(m) = t_u(m) \cdot w$.

As an example embodiment, the at least two pre-stored primary synchronization time-domain signals used in the current step S104 may be stored in advance. The at least two primary synchronization time-domain signals may be obtained by converting the primary synchronization frequency-domain signals; after the conversion, the at least two primary synchronization time-domain signals obtained through the conversion may be stored, so that the operational complexity of a base station side is lowered. During practical application, there may be multiple primary synchronization time-domain signals stored locally in advance, for example, three primary synchronization time-domain signals may be locally pre-stored, wherein each signal may include a CP, or may not include a CP.

The primary synchronization frequency-domain signal $d_u(n)$ may be generated by virtue of a formula as follows:

$$d_u(n) = e^{-j\frac{\pi u n(n+1)}{63}}$$, $n = 0,1,...62$, wherein $u$ may adopt three values, i.e. 25, 29 and 34.

Primary synchronization frequency-domain signal resource mapping may be implemented by virtue of a formula as follows:

$$a_{u,k} = \begin{cases} d_u(k+31) & 0 \le k \le 31 \\ 0, & 32 \le k \le N-32 \\ d_u(k+31-N) & N-31 \le k \le N-1 \end{cases}$$

N is the number of sampling points in one Orthogonal Frequency Division Multiplexing (OFDM) symbol, not including a CP.

The primary synchronization frequency-domain signal may be converted to the time domain, and may be stored:

$$t_u(m) = IFFT(a_{u,k}),$$

$k = 0,...N - 1$, $m = 0,...N - 1$

wherein IFFT represents Inverse Fast Fourier Transform.

For a primary synchronization time-domain signal including a CP, each time-domain signal may be added with a CP according to the following formula:

$$t_{u,cp}(m) = \begin{cases} t_u(N - N_{cp,l} + m), m = 0,1,...,N_{cp,l} - 1 \\ t_u(m - N_{cp,l}), m = N_{cp,l}, N_{cp,l} + 1,...,N_{cp,l} + N - 1 \end{cases}$$

wherein $l$ represents an index of the OFMD symbol, on which the primary synchronization signal is mapped, specified in a 3GPP protocol, $N_{cp,l}$ represents the length of the CP of the OFDM symbol $l$, and its value is specified in LTE protocol 36.211.

Step S106: one or more signals which are obtained by adding the weighted primary synchronization time-domain signal and the one or more time-domain signals are sent.

There may be many implementation manners for step S106. For example, the one or more LTE time-domain signals and the weighted primary synchronization time-domain signal may be added and then sent through an air interface. Two specific example implementations of step S106 respectively aiming at signals without a CP and signals with a CP are described below.

For signals not including a CP

If the one or more LTE time-domain signals, except the primary synchronization signals, are set to be $s(m)$, the superposition of the time-domain signals in Step S106 may be expressed by virtue of a formula as follows. $s'(l,m) = s(l,m) + t_u(m)$, $m = 0,1...N - 1$, wherein $l$ represents an index of the OFDM symbol, on which the primary synchronization signal is mapped, specified in the 3GPP protocol.

Time-domain superposition may require the addition of a CP before the signal can be sent through the air interface.

$$s'_{cp}(l,m) = \begin{cases} s'(l, N - N_{cp,l} + m), m = 0,1...N_{cp,l} - 1 \\ s'(l, m - N_{cp,l}), m = N_{cp,l}, N_{cp,l} + 1...N_{cp,l} + N - 1 \end{cases}$$

wherein $N_{cp,l}$ represents the length of the CP of the OFDM symbol $l$, and its value is specified in LTE protocol 36.211.

For signals including a CP

If the obtained one or more LTE time-domain signals except the primary synchronization signals are set to be $s(m)$, the superposition of the time-domain signals in step S106 may be expressed by virtue of a formula as follows. $s'(l,m) = s(l,m) + t_{u,cp}(m)$, $m = 0,1...N + N_{cp,l} - 1$, wherein $l$ represents the index of the OFDM symbol, on which the primary synchronization signal is mapped, specified in the 3GPP protocol.

The signals may be sent through the air interface after time-domain addition.

By the steps, one or more time-domain signals corresponding to one or more frequency-domain signals except the primary synchronization frequency-domain signals are acquired; one primary synchronization time-domain signal is determined in the at least two pre-stored primary synchronization time-domain signals and weighted processing is performed on the determined primary synchronization time-domain signal; and the one or more time-domain signals and the weighted primary synchronization time-domain signal are added and then sent, so that the problem of relatively undiversified signal sending manner in the related technology is solved, and diversified sending manners are implemented.

Another embodiment of the present disclosure further provides a sending device, the device is configured to implement the embodiment and example implementation modes as mentioned above, and what has been described will not be repeated. For example, a term "component", used below, is a combination of software and/or hardware for realizing preset functions. The device described in the following embodiment is preferably implemented by software, but the implementation of the device with hardware or the combination of software and hardware is also possible and conceived.

Fig. 2 is a block diagram of a sending device according to an embodiment of the present disclosure. As shown in Fig. 2, the sending device may include: an acquisition component 22, a weighted processing component 24 and a sending component 26. Each component is briefly described below.

The acquisition component 22 may be configured to acquire one or more time-domain signals corresponding to one or more frequency-domain signals except primary synchronization frequency-domain signals;

the weighted processing component 24 may be configured to determine one primary synchronization time-domain signal in at least two pre-stored primary synchronization time-domain signals and perform weighted processing on the determined primary synchronization time-domain signal; and

the sending component 26 may be configured to send a signal which is obtained by adding the weighted primary synchronization time-domain signal and the one or more time-domain signals.

Fig. 3 is a first block diagram of a sending device according to an example embodiment of the present disclosure. As shown in Fig. 3, the acquisition component 22 may include:

an acquisition sub-component 32, which may be configured to generate the one or more frequency-domain signals except the primary synchronization frequency-domain signals, and acquire the one or more time-domain signals by converting the generated one or more frequency-domain signals.

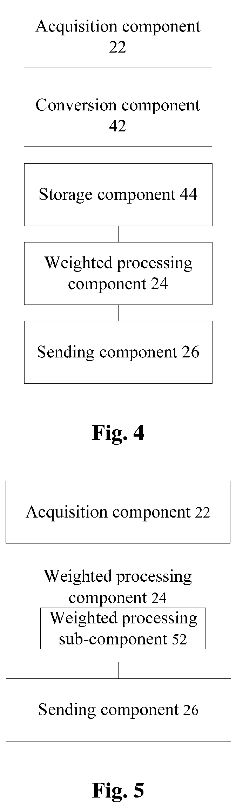

Fig. 4 is a second block diagram of a sending device according to an example embodiment of the present disclosure. As shown in Fig. 4, the device further may include:

a conversion component 42, which may be configured to convert the primary synchronization frequency-domain signals into the at least two primary synchronization time-domain signals; and

a storage component 44, which may be configured to store the at least two primary synchronization time-domain signals obtained by the conversion.

Fig. 5 is a third block diagram of a sending device according to an example embodiment of the present disclosure. As shown in Fig. 5, the weighted processing component 24 may include:

a weighted processing sub-component 52, which may be configured to select one primary synchronization time-domain signal from the at least two pre-stored primary synchronization time-domain signals according to a cell ID, and perform power and phase weighted processing on the selected primary synchronization time-domain signal.

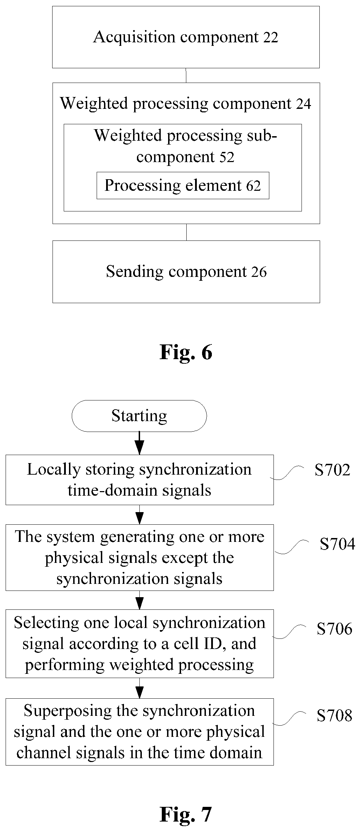

Fig. 6 is a fourth block diagram of a sending device according to an example embodiment of the present disclosure. As shown in Fig. 6, the weighted processing sub-component 52 may include:

a processing element 62, which may be configured to select one primary synchronization time-domain signal from the at least two pre-stored primary synchronization time-domain signals according to the cell ID, and multiply the selected primary synchronization time-domain signal by a complex number to regulate power of the primary synchronization time-domain signal and an initial phase of the primary synchronization time-domain signal.

The embodiment of the present disclosure is further described below. In one embodiment, it is provided a sending method for an LTE primary synchronization signal, which may include: locally pre-storing three primary synchronization signal time-domain sequences off line; generating one or more physical time-domain signals except the primary synchronization signals according to a 3rd Generation Partnership Project (3GPP) LTE protocol; selecting one primary synchronization signal from the three local time-domain primary synchronization signals according to a cell ID, and performing related power and phase weighted processing on the selected primary synchronization signal; and adding the primary synchronization signal and the one or more time-domain signals except the LTE primary synchronization signals and sending the signal obtained by the addition through an air interface. The 3GPP LTE protocol may include 36.211 ~36.213, and a physical cell $N_{ID}^{\text{cell}}$ may be represented as $N_{ID}^{\text{cell}} = 3N_{ID}^{(1)} + N_{ID}^{(2)}$.

The power and phase weighted processing performed on the primary synchronization signal may refer to regulating power of the synchronization signal sequence and regulating an initial phase of the sequence, which may adopt more than one implementation manner, for example, the weighted processing may be implemented by multiplying the primary synchronization signal by a complex number.

Another embodiment of the present disclosure further provides a computer readable storage medium which records program codes which, when executed, allow a computer to perform function including:

acquiring one or more time-domain signals corresponding to one or more frequency-domain signals except primary synchronization frequency-domain signals;

determining one primary synchronization time-domain signal in at least two pre-stored primary synchronization time-domain signals and performing weighted processing on the determined primary synchronization time-domain signal; and

sending a signal which is obtained by adding the weighted primary synchronization time-domain signal and the one or more time-domain signals.

Embodiment 1

Fig. 7 is a flowchart of sending a primary synchronization signal in the LTE according to an embodiment of the present disclosure. As shown in Fig. 7, the flow may include the following steps S702 to S708.

Step S702: three primary synchronization time-domain signals may be locally pre-stored, wherein each signal does not include a Cyclic Prefix (CP).

The primary synchronization frequency-domain signal $d_u(n)$ may be generated by virtue of a formula as follows:

$$d_u(n) = e^{-j\frac{\pi u n (n+1)}{63}},$$

, $n = 0,1,...62$, wherein $u$ may adopt three values, i.e. 25, 29 and 34.

Primary synchronization frequency-domain signal resource mapping may be implemented by virtue of a formula as follows:

$$a_{u,k} = \begin{cases} d_u(k+31) & 0 \le k \le 31 \\ 0, & 32 \le k \le N-32 \\ d_u(k+31-N) & N-31 \le k \le N-1 \end{cases}$$

N is the number of sampling points in one Orthogonal Frequency Division Multiplexing (OFDM) symbol, not including a CP.

The primary synchronization frequency-domain signal may be converted to the time domain, and may be stored:

$$t_u(m) = IFFT(a_{u,k}),$$

$k = 0,...N - 1$, $m = 0,...N - 1$

wherein IFFT represents Inverse Fast Fourier Transform.

Step S704: one or more physical time-domain signals except the primary synchronization signals may be generated according to a 3GPP LTE protocol, the time-domain signal not including a CP part.

Step S706: a local primary synchronization time-domain signal may be selected according to a cell ID and related power and phase weighted processing may be performed on the selected primary synchronization time-domain signal.

A corresponding relationship for selecting the local primary synchronization signal according to the cell ID may be as follows: $N_{ID}^{(2)}$ may be calculated according to the cell ID, $N_{ID}^{cell} = 3N_{ID}^{(1)} + N_{ID}^{(2)}$, a root sequence u may be determined according to $N_{ID}^{(2)}$, then the primary synchronization signal time-domain sequence may be determined, as shown in Table 2.

Table 2

| $N_{ID}^{(2)}$ | Root index $u$ |
|---|---|
| 0 | 25 |
| 1 | 29 |
| 2 | 34 |

The power and phase weighted processing performed on the synchronization signal may refer to performing complex multiplication of a weight factor of the synchronization signal and the synchronization signal. w represents the weight factor, and w for different sending antennae may be different. In an embodiment, weighted processing may be performed by virtue of a formula as follows: $t_u(m) = t_u(m) \cdot w$.

Step S708: the one or more LTE time-domain signals obtained in Step S704 and the primary synchronization time-domain signal obtained in Step S706 may be added and then sent through an air interface.

If the one or more LTE time-domain signals, except the primary synchronization signals, obtained in Step S704 are set to be $s(m)$, the superposition of the time-domain signals in Step S708 may be expressed by virtue of a formula as follows. $s'(l,m) = s(l,m) + t_u(m)$, $m = 0,1...N - 1$, wherein $l$ represents an index of the OFDM symbol, on which the primary synchronization signal is mapped, specified in the 3GPP protocol.

Time-domain superposition may require the addition of a CP before the signal can be sent through the air interface.

$$s_{cp}^{'}(l,m) = \begin{cases} s'(l, N - N_{cp,l} + m), m = 0,1...N_{cp,l} - 1 \\ s'(l, m - N_{cp,l}), m = N_{cp,l}, N_{cp,l} + 1...N_{cp,l} + N - 1 \end{cases}$$

wherein $N_{cp,l}$ represents the length of the CP of the OFDM symbol $l$, and its value is specified in LTE protocol 36.211.

By the steps, the synchronization signal can be sent in an LTE base station, so that UE may be synchronized with the base station in a wireless channel, and a requirement of the system is met.

Embodiment 2

Three primary synchronization time-domain signals may be locally pre-stored, each primary synchronization time-domain signal including a CP, the step may include:

a primary synchronization frequency-domain signal $d_u(n)$ may be generated by virtue of a formula as follows:

$$d_u(n) = e^{-j\frac{\pi un(n+1)}{63}},$$

$n = 0,1,...62$, wherein $u$ may adopt three values, i.e. 25, 29 and 34.

Primary synchronization frequency-domain signal resource mapping may be implemented by virtue of a formula as follows:

$$a_{u,k} = \begin{cases} d_u(k+31), & 0 \le k \le 31 \\ 0, & 32 \le k \le N - 32 \\ d_u(k+31-N), & N - 31 \le k \le N - 1 \end{cases}$$

N is the number of sampling points in one OFDM symbol, not including a CP.

The primary synchronization frequency-domain signal may be converted to the time domain, and may be stored:

$$t_u(m) = IFFT(a_{u,k}),$$

$k = 0,...N - 1$, $m = 0,...N - 1$
wherein IFFT represents Inverse Fast Fourier Transform.

Each time-domain signal may be added with a CP:

$$t_{u,cp}(m) = \begin{cases} t_u(N - N_{cp,l} + m), m = 0,1,...,N_{cp,l} - 1 \\ t_u(m - N_{cp,l}), m = N_{cp,l}, N_{cp,l} + 1,...,N_{cp,l} + N - 1 \end{cases}$$

wherein $l$ represents an index of the OFMD symbol, on which the primary synchronization signal is mapped, specified in a 3GPP protocol, $N_{cp,l}$ represents the length of the CP of the OFDM symbol $l$, and its value is specified in LTE protocol 36.211.

One or more physical time-domain signals except the primary synchronization signals may be generated according to a 3GPP LTE protocol, each time-domain signal including a CP part.

A local primary synchronization signal may be selected according to a cell ID and related power and phase weighted processing may be performed on the selected primary synchronization signal. A corresponding relationship for selecting the local primary synchronization signal according to the cell ID may be as follows: $N_{ID}^{(2)}$ may be calculated

according to the cell ID, $N_{\mathrm{ID}}^{\mathrm{cell}} = 3N_{\mathrm{ID}}^{(1)} + N_{\mathrm{ID}}^{(2)}$, a root sequence $u$ may be determined according to $N_{ID}^{(2)}$, then the primary synchronization signal time-domain sequence may be determined, as shown in Table 3.

Table 3

| $N_{ID}^{(2)}$ | Root index $u$ |
|---|---|
| 0 | 25 |
| 1 | 29 |
| 2 | 34 |

The power and phase weighted processing performed on the synchronization signal may refer to performing complex multiplication of a weight factor of the synchronization signal and the synchronization signal.

The obtained one or more LTE time-domain signals and the primary synchronization time-domain signal may be added and then sent through an air interface.

If the obtained one or more LTE time-domain signals except the primary synchronization signals are set to be $s(m)$, the superposition of the time-domain signals may be expressed by virtue of a formula as follows. $s'(l,m) = s(l,m) + t_{u,cp}(m)$, $m = 0,1 ... N + N_{cp,l} - 1$, wherein $l$ represents the index of the OFDM symbol, on which the primary synchronization signal is mapped, specified in the 3GPP protocol. The signals may be sent through the air interface after time-domain addition.

Embodiment 3

This example embodiment provides a hardware implementation of the sending method using a general purpose computing device and program codes.

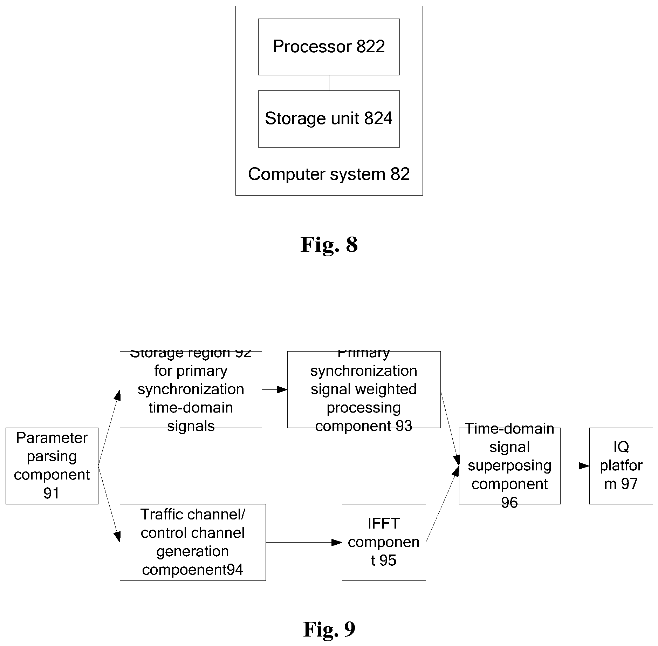

Fig. 8 is a diagram showing a hardware implementation of the sending method using a general purpose computing device and program codes according to embodiment 3 of the present disclosure. As shown in Fig. 8, the hardware block diagram may include a computer system 82, which may include a processor 822 for executing program codes and a storage unit 824 for storing the program codes. The processor 822 may be coupled with the storage unit 824 using buses, such as address buses, data buses and control buses. During execution of the program, the processor 822 may read from the storage unit 824 to obtain the program codes and execute the program codes in order to implement corresponding operations.

The acquisition component 22 or the acquisition sub-component 32 in the forgoing embodiments may be implemented in the following manner: the processor 822 reads from the storage unit 824 the corresponding program codes for acquiring the one or more time-domain signals or for generating and converting the frequency domain signals and executes the program codes.

The weighted processing component 24 or the weighted processing sub-component 52 or the processing element 62 in the forgoing embodiments may be implemented in the following manner: the processor 822 reads from the storage unit 824 the corresponding program codes for determining one primary synchronization time-domain signal and performing weighted processing and executes the program codes.

The sending component 26 in the forgoing embodiments may be implemented in the following manner: the processor 822 reads from the storage unit 824 the corresponding program codes for adding the time-domain signals and sending the result and executes the program codes.

The conversion component 42 in the forgoing embodiments may be implemented in the following manner: the processor 822 reads from the storage unit 824 the corresponding program codes for converting the primary synchronization frequency-domain signals into primary synchronization time-domain signals and executes the program codes.

The storage component 44 in the forgoing embodiments may be implemented by using the storage unit 824.

Apparently, those skilled in the art should know that each component or step of the present disclosure may be implemented by a universal computing device, and the components or steps may be concentrated on a single computing device or distributed on a network formed by at least two computing devices, and may be implemented by programmable codes executable for the computing devices, so that the components or steps may be stored in a storage device for execution with the computing devices. Moreover, the shown or described steps may be executed in a sequence different from that described here under a certain condition, or may form each integrated circuit component, or at least two components or steps therein may form a single integrated circuit component for implementation.

Embodiment 4

The present embodiment provides another hardware implementation of the sending method. Fig. 9 is a diagram showing another hardware implementation of the sending method according to an embodiment of the present disclosure.

As shown in Fig. 9, the parameter parsing component 91 is configured to parse parameters of various services and control channels that are delivered by the CMAC (media access control layer), including but not limited to cell bandwidth, cell ID, number of cell logical antenna ports etc. The storage region 92 for the primary synchronization time-domain signals is configured to store at least two sets of local primary synchronization time-domain signals, and the storage component 44 described in the forgoing embodiment may be the storage region 92. As an implementation, the primary synchronization time-domain signals may be obtained by the conversion component 42 through converting the primary synchronization frequency-domain signals. The primary synchronization time-domain signals may be stored in a static storage region. The primary synchronization signal weighted processing component 93 is configured to conduct some basic multiplying operation to perform weighted operation on the signals, and the weighted processing component 24 described in the forgoing embodiment may be the primary synchronization signal weighted processing component 93. As an example implementation, the weighted processing sub-component 52 contained in the weighted processing component 24 (or the processing element 62 contained in the weighted processing sub-component 52) may select one primary synchronization time-domain signal from the at least two pre-stored primary synchronization time-domain signals according to the cell ID so that weighted operation can be performed on power and phase. The traffic channel/control channel generation component 94 can generate the traffic channel/control channel, and this generation procedure can be conducted at the same time when the primary synchronization signal is generated. After the traffic channel/control channel has been generated, the signals from the generated channel can be converted into time-domain signals using IFFT component 95. Through the above procedure, LTE time-domain signals except the primary synchronization frequency-domain signals can be generated. The acquisition component 22 described in the forgoing embodiment may be the combination of the traffic channel/control channel generation component 94 and the IFFT component 95. As an implementation, the acquisition sub-component 32 contained in the acquisition component 22 may be configured to generate the one or more frequency-domain signals except the primary synchronization frequency-domain signals, and acquire the one or more time-domain signals by converting the generated one or more frequency-domain signals. The time-domain signal superposing component 96 is configured to implement the function of the sending component 26 and is configured to add the primary synchronization signal and the LTE signal except the primary synchronization signals in the time domain and finally send the data to the IQ platform 97 via an interface.

The hardware implementation described above may be practically implemented in various kinds of hardware, for example, it may be implemented by using a Field-Programmable Gate Array (FPGA), a Digital Signal Processing (DSP), an Application-Specific Integrated Circuit (ASIC) or a packaged chip.

Under some circumstances, the shown or described steps may be executed in a sequence different from that described here, or may form each integrated circuit component, or at least two components or steps therein may form a single integrated circuit component for implementation.

Apparently, those skilled in the art would understand that the implementation manner using a general-purpose computing device and program codes and the implementation manner using hardware can be combined, that is, some of the components may be made into a hardware component, such as FPGA circuit component or ASIC component, while others may be implemented using the general-purpose computing device and the program codes, especially when the hardware component can execute these functional components faster. The implementation manners designed by the skilled in the art under such a condition should also fall within the patent scope of the present application. As a consequence, the present disclosure is not limited to any specific hardware and software combination.

The above is only the example embodiment of the present disclosure and not intended to limit the present disclosure, and for those skilled in the art, the present disclosure may have various modifications and variations.

**Claims**

1.  A sending method, comprising:

    acquiring one or more time-domain signals corresponding to one or more frequency-domain signals except primary synchronization frequency-domain signals (S102), said acquiring comprises: generating the one or more frequency-domain signals except the primary synchronization frequency-domain signals, and acquiring the one or more time-domain signals by converting the generated one or more frequency-domain signals;
    determining one primary synchronization time-domain signal in at least two pre-stored primary synchronization time-domain signals and performing weighted processing on the determined primary synchronization time-domain signal (S104), said determining comprises: selecting one primary synchronization time-domain signal

EP 3 048 842 B1

from the at least two pre-stored primary synchronization time-domain signals according to a cell Identifier, ID, and performing power and phase weighted processing on the selected primary synchronization time-domain signal; and
sending a signal which is obtained by adding the weighted primary synchronization time-domain signal and the one or more time-domain signals (S106).

2. The method according to claim 1, wherein before determining one primary synchronization time-domain signal in the at least two pre-stored primary synchronization time-domain signals and performing the weighted processing on the determined primary synchronization time-domain signal (S104), the method further comprises:

converting the primary synchronization frequency-domain signals into the at least two primary synchronization time-domain signals; and
storing the at least two primary synchronization time-domain signals obtained by the conversion.

3. The method according to claim 1, wherein selecting one primary synchronization time-domain signal from the at least two pre-stored primary synchronization time-domain signals according to the cell ID, and performing the power and phase weighted processing on the selected primary synchronization time-domain signal comprises:
selecting one primary synchronization time-domain signal from the at least two pre-stored primary synchronization time-domain signals according to the cell ID, and multiplying the selected primary synchronization time-domain signal by a complex number to regulate power of the primary synchronization time-domain signal and an initial phase of the primary synchronization time-domain signal.

4. A sending device, comprising:

an acquisition component (22), configured to acquire one or more time-domain signals corresponding to one or more frequency-domain signals except primary synchronization frequency-domain signals;
a weighted processing component (24), configured to determine one primary synchronization time-domain signal in at least two pre-stored primary synchronization time-domain signals and performing weighted processing on the determined primary synchronization time-domain signal; and
a sending component (26), configured to send a signal which is obtained by adding the weighted primary synchronization time-domain signal and the one or more time-domain signals;
wherein the acquisition component comprises:

an acquisition sub-component (32), configured to generate the one or more frequency-domain signals except the primary synchronization frequency-domain signals, and acquire the one or more time-domain signals by converting the generated one or more frequency-domain signals;
the weighted processing component comprises:
a weighted processing sub-component (52), configured to select one primary synchronization time-domain signal from the at least two pre-stored primary synchronization time-domain signals according to a cell Identifier, ID, and perform power and phase weighted processing on the selected primary synchronization time-domain signal.

5. The device according to claim 4, further comprising:

a conversion component (42), configured to convert the primary synchronization frequency-domain signals into the at least two primary synchronization time-domain signals; and
a storage component (44), configured to store the at least two primary synchronization time-domain signals obtained by the conversion.

6. The device according to claim 4, wherein the weighted processing sub-component (52) comprises:
a processing element (62), configured to select one primary synchronization time-domain signal from the at least two pre-stored primary synchronization time-domain signals according to the cell ID, and multiply the selected primary synchronization time-domain signal by a complex number to regulate power of the primary synchronization time-domain signal and an initial phase of the primary synchronization time-domain signal.

7. A computer readable storage medium which records program codes which, when executed, allow a computer to perform functions comprising:

acquiring one or more time-domain signals corresponding to one or more frequency-domain signals except primary synchronization frequency-domain signals (S102), said acquiring comprises: generating the one or more frequency-domain signals except the primary synchronization frequency-domain signals, and acquiring the one or more time-domain signals by converting the generated one or more frequency-domain signals; determining one primary synchronization time-domain signal in at least two pre-stored primary synchronization time-domain signals and performing weighted processing on the determined primary synchronization time-domain signal (S104), said determining comprises: selecting one primary synchronization time-domain signal from the at least two pre-stored primary synchronization time-domain signals according to a cell Identifier, ID, and performing power and phase weighted processing on the selected primary synchronization time-domain signal; and

sending a signal which is obtained by adding the weighted primary synchronization time-domain signal and the one or more time-domain signals.

**Patentansprüche**

1. Sendeverfahren, Folgendes umfassend:

   Erfassen eines oder mehrerer Zeitbereichssignale entsprechend einem oder mehreren Frequenzbereichssignalen mit Ausnahme von Frequenzbereichssignalen einer Primärsynchronisation (S102), wobei das Erfassen Folgendes umfasst: Generieren von einem oder mehreren Frequenzbereichssignalen mit Ausnahme der Frequenzbereichssignale einer Primärsynchronisation und Erfassen des einen oder mehrerer Zeitbereichssignale durch Umwandeln des einen oder mehrerer generierter Frequenzbereichssignale;
   Bestimmen eines Zeitbereichssignals einer Primärsynchronisation in mindestens zwei vorgespeicherten Zeitbereichssignalen einer Primärsynchronisation und Durchführen einer gewichteten Verarbeitung auf dem bestimmten Zeitbereichssignal einer Primärsynchronisation (S104), wobei das Bestimmen Folgendes umfasst: Auswählen eines Zeitbereichssignals einer Primärsynchronisation aus den mindestens zwei vorgespeicherten Zeitbereichssignalen einer Primärsynchronisation entsprechend einer Zellenkennung, ID, und Durchführen einer leistungs- und phasengewichteten Verarbeitung auf dem ausgewählten Zeitbereichssignal einer Primärsynchronisation; und
   Senden eines Signals, das durch Addieren des gewichteten Zeitbereichssignals einer Primärsynchronisation und des einen oder mehrerer Zeitbereichssignale (S106) erhalten wird.

2. Verfahren nach Anspruch 1, wobei das Verfahren vor dem Bestimmen eines Zeitbereichssignals einer Primärsynchronisation in den mindestens zwei vorgespeicherten Zeitbereichssignalen einer Primärsynchronisation und Durchführen der gewichteten Verarbeitung auf dem bestimmten Zeitbereichssignal einer Primärsynchronisation (S104) weiter Folgendes umfasst:

   Umwandeln der Frequenzbereichssignale einer Primärsynchronisation in die mindestens zwei Zeitbereichssignale einer Primärsynchronisation; und
   Speichern der durch die Umwandlung erhaltenen mindestens zwei Zeitbereichssignale einer Primärsynchronisation.

3. Verfahren nach Anspruch 1, wobei das Auswählen eines Zeitbereichssignals einer Primärsynchronisation aus den mindestens zwei vorgespeicherten Zeitbereichssignalen einer Primärsynchronisation entsprechend der Zellen-ID und das Durchführen der leistungs- und phasengewichteten Verarbeitung auf dem ausgewählten Zeitbereichssignal einer Primärsynchronisation Folgendes umfassen:
   Auswählen eines Zeitbereichssignals einer Primärsynchronisation aus den mindestens zwei vorgespeicherten Zeitbereichssignalen einer Primärsynchronisation entsprechend der Zellen-ID und Multiplizieren des ausgewählten Zeitbereichssignals einer Primärsynchronisation mit einer komplexen Zahl zum Regeln der Leistung des Zeitbereichssignals einer Primärsynchronisation und einer ursprünglichen Phase des Zeitbereichssignals einer Primärsynchronisation.

4. Sendevorrichtung, Folgendes umfassend:

   eine Erfassungskomponente (22), konfiguriert zum Erfassen eines oder mehrerer Zeitbereichssignale entsprechend einem oder mehreren Frequenzbereichssignalen mit Ausnahme von Frequenzbereichssignalen einer Primärsynchronisation;

eine gewichtete Verarbeitungskomponente (24), konfiguriert zum Bestimmen eines Zeitbereichssignals einer Primärsynchronisation in mindestens zwei vorgespeicherten Zeitbereichssignalen einer Primärsynchronisation und Durchführen einer gewichteten Verarbeitung auf dem bestimmten Zeitbereichssignal einer Primärsynchronisation; und

eine Sendekomponente (26), konfiguriert zum Senden eines Signals, das durch Addieren des gewichteten Zeitbereichssignals einer Primärsynchronisation und des einen oder mehererer Zeitbereichssignale erhalten wird;

wobei die Erfassungskomponente Folgendes umfasst:

eine Erfassungsteilkomponente (32), konfiguriert zum Generieren von einem oder mehreren Frequenzbereichssignalen mit Ausnahme der Frequenzbereichssignale einer Primärsynchronisation und Erfassen des einen oder mehrerer Zeitbereichssignale durch Umwandeln des einen oder mehrerer generierter Frequenzbereichssignale;

wobei die gewichtete Verarbeitungskomponente Folgendes umfasst:

eine gewichtete Verarbeitungsteilkomponente (52), konfiguriert zum Auswählen eines Zeitbereichssignals einer Primärsynchronisation aus den mindestens zwei vorgespeicherten Zeitbereichssignalen einer Primärsynchronisation entsprechend einer Zellenkennung, ID, und Durchführen einer leistungs- und phasengewichteten Verarbeitung auf dem ausgewählten Zeitbereichssignal einer Primärsynchronisation.

5. Vorrichtung nach Anspruch 4, weiter Folgendes umfassend:

eine Umwandlungskomponente (42), konfiguriert zum Umwandeln der Frequenzbereichssignale einer Primärsynchronisation in die mindestens zwei Zeitbereichssignale einer Primärsynchronisation; und
eine Speicherkomponente (44), konfiguriert zum Speichern der durch die Umwandlung erhaltenen mindestens zwei Zeitbereichssignale einer Primärsynchronisation.

6. Vorrichtung nach Anspruch 4, wobei die gewichtete Verarbeitungsteilkomponente (52) Folgendes umfasst:
ein Verarbeitungselement (62), konfiguriert zum Auswählen eines Zeitbereichssignals einer Primärsynchronisation aus den mindestens zwei vorgespeicherten Zeitbereichssignalen einer Primärsynchronisation entsprechend der Zellen-ID und Multiplizieren des ausgewählten Zeitbereichssignals einer Primärsynchronisation mit einer komplexen Zahl zum Regeln der Leistung des Zeitbereichssignals einer Primärsynchronisation und einer ursprünglichen Phase des Zeitbereichssignals einer Primärsynchronisation.

7. Computerlesbares Speichermedium, das Programmcodes aufzeichnet, die, wenn sie ausgeführt werden, einem Computer erlauben, Funktionen auszuführen, die Folgendes umfassen:

Erfassen eines oder mehrerer Zeitbereichssignale entsprechend einem oder mehreren Frequenzbereichssignalen mit Ausnahme von Frequenzbereichssignalen einer Primärsynchronisation (S102), wobei das Erfassen Folgendes umfasst: Generieren von einem oder mehreren Frequenzbereichssignalen mit Ausnahme der Frequenzbereichssignale einer Primärsynchronisation und Erfassen des einen oder mehrerer Zeitbereichssignale durch Umwandeln des einen oder mehrerer generierter Frequenzbereichssignale;
Bestimmen eines Zeitbereichssignals einer Primärsynchronisation in mindestens zwei vorgespeicherten Zeitbereichssignalen einer Primärsynchronisation und Durchführen einer gewichteten Verarbeitung auf dem bestimmten Zeitbereichssignal einer Primärsynchronisation (S104), wobei das Bestimmen Folgendes umfasst: Auswählen eines Zeitbereichssignals einer Primärsynchronisation aus den mindestens zwei vorgespeicherten Zeitbereichssignalen einer Primärsynchronisation entsprechend einer Zellenkennung, ID, und Durchführen einer leistungs- und phasengewichteten Verarbeitung auf dem ausgewählten Zeitbereichssignal einer Primärsynchronisation; und
Senden eines Signals, das durch Addieren des gewichteten Zeitbereichssignals einer Primärsynchronisation und des einen oder mehrerer Zeitbereichssignale erhalten wird.

**Revendications**

1. Procédé d'envoi, comprenant :

l'acquisition d'un ou plusieurs signaux de domaine temporel correspondant à un ou plusieurs signaux de domaine fréquentiel à l'exception de signaux de domaine fréquentiel de synchronisation primaire (S102), ladite acquisition comprend : la génération des un ou plusieurs signaux de domaine fréquentiel à l'exception des signaux de domaine fréquentiel de synchronisation primaire, et l'acquisition des un ou plusieurs signaux de domaine temporel en convertissant les un ou plusieurs signaux de domaine fréquentiel générés ;

la détermination d'un signal de domaine temporel de synchronisation primaire dans au moins deux signaux de domaine temporel de synchronisation primaire stockés au préalable et la mise en œuvre d'un traitement pondéré sur le signal de domaine temporel de synchronisation primaire déterminé (S104), ladite détermination comprend : la sélection d'un signal de domaine temporel de synchronisation primaire à partir des au moins deux signaux de domaine temporel de synchronisation primaire stockés au préalable conformément à un identifiant, ID, de cellule et la mise en œuvre d'un traitement pondéré de puissance et de phase sur le signal de domaine temporel de synchronisation primaire sélectionné ; et

l'envoi d'un signal qui est obtenu en additionnant le signal de domaine temporel de synchronisation primaire pondéré et les un ou plusieurs signaux de domaine temporel (S106).

2. Procédé selon la revendication 1, dans lequel avant la détermination d'un signal de domaine temporel de synchronisation primaire dans les au moins deux signaux de domaine temporel de synchronisation primaire stockés au préalable et la mise en œuvre du traitement pondéré sur le signal de domaine temporel de synchronisation primaire déterminé (S104), le procédé comprend en outre :

la conversion des signaux de domaine fréquentiel de synchronisation primaire en les au moins deux signaux de domaine temporel de synchronisation primaire ; et

le stockage des au moins deux signaux de domaine temporel de synchronisation primaire obtenus par la conversion.

3. Procédé selon la revendication 1, dans lequel la sélection d'un signal de domaine temporel de synchronisation primaire à partir des au moins deux signaux de domaine temporel de synchronisation primaire stockés au préalable conformément à l'ID de cellule, et la mise en œuvre du traitement pondéré de puissance et de phase sur le signal de domaine temporel de synchronisation primaire sélectionné comprennent :

la sélection d'un signal de domaine temporel de synchronisation primaire à partir des au moins deux signaux de domaine temporel de synchronisation primaire stockés au préalable conformément à l'ID de cellule, et la multiplication du signal de domaine temporel de synchronisation primaire sélectionné par un nombre complexe pour réguler une puissance du signal de domaine temporel de synchronisation primaire et une phase initiale du signal de domaine temporel de synchronisation primaire.

4. Dispositif d'envoi, comprenant :

un composant d'acquisition (22), configuré pour acquérir un ou plusieurs signaux de domaine temporel correspondant à un ou plusieurs signaux de domaine fréquentiel à l'exception de signaux de domaine fréquentiel de synchronisation primaire ;

un composant de traitement pondéré (24), configuré pour déterminer un signal de domaine temporel de synchronisation primaire dans au moins deux signaux de domaine temporel de synchronisation primaire stockés au préalable et mettant en œuvre un traitement pondéré sur le signal de domaine temporel de synchronisation primaire déterminé ; et

un composant d'envoi (26), configuré pour envoyer un signal qui est obtenu en additionnant le signal de domaine temporel de synchronisation primaire pondéré et les un ou plusieurs signaux de domaine temporel ;

dans lequel le composant d'acquisition comprend :

un sous-composant d'acquisition (32), configuré pour générer les un ou plusieurs signaux de domaine fréquentiel à l'exception des signaux de domaine fréquentiel de synchronisation primaire, et acquérir les un ou plusieurs signaux de domaine temporel en convertissant les un ou plusieurs signaux de domaine fréquentiel générés ;

le composant de traitement pondéré comprend :

un sous-composant de traitement pondéré (52), configuré pour sélectionner un signal de domaine temporel de synchronisation primaire à partir des au moins deux signaux de domaine temporel de synchronisation primaire stockés au préalable conformément à un identifiant, ID, de cellule et mettre en œuvre un traitement pondéré de puissance et de phase sur le signal de domaine temporel de synchronisation primaire sélectionné.

5. Dispositif selon la revendication 4, comprenant en outre :

un composant de conversion (42), configuré pour convertir les signaux de domaine fréquentiel de synchronisation primaire en les au moins deux signaux de domaine temporel de synchronisation primaire ; et

un composant de stockage (44), configuré pour stocker les au moins deux signaux de domaine temporel de synchronisation primaire obtenus par la conversion.

6. Dispositif selon la revendication 4, dans lequel le sous-composant de traitement pondéré (52) comprend :

un élément de traitement (62), configuré pour sélectionner un signal de domaine temporel de synchronisation primaire à partir des au moins deux signaux de domaine temporel de synchronisation primaire stockés au préalable conformément à l'ID de cellule, et multiplier le signal de domaine temporel de synchronisation primaire sélectionné par un nombre complexe pour réguler une puissance du signal de domaine temporel de synchronisation primaire et une phase initiale du signal de domaine temporel de synchronisation primaire.

7. Support de stockage lisible par ordinateur qui enregistre des codes de programme qui, lorsqu'ils sont exécutés, permettent à un ordinateur de mettre en œuvre des fonctions comprenant :

l'acquisition d'un ou plusieurs signaux de domaine temporel correspondant à un ou plusieurs signaux de domaine fréquentiel à l'exception de signaux de domaine fréquentiel de synchronisation primaire (S102), ladite acquisition comprend : la génération des un ou plusieurs signaux de domaine fréquentiel à l'exception des signaux de domaine fréquentiel de synchronisation primaire, et l'acquisition des un ou plusieurs signaux de domaine temporel en convertissant les un ou plusieurs signaux de domaine fréquentiel générés ;

la détermination d'un signal de domaine temporel de synchronisation primaire dans au moins deux signaux de domaine temporel de synchronisation primaire stockés au préalable et la mise en œuvre d'un traitement pondéré sur le signal de domaine temporel de synchronisation primaire déterminé (S104), ladite détermination comprend : la sélection d'un signal de domaine temporel de synchronisation primaire à partir des au moins deux signaux de domaine temporel de synchronisation primaire stockés au préalable conformément à un identifiant, ID, de cellule et la mise en œuvre d'un traitement pondéré de puissance et de phase sur le signal de domaine temporel de synchronisation primaire sélectionné ; et

l'envoi d'un signal qui est obtenu en additionnant le signal de domaine temporel de synchronisation primaire pondéré et les un ou plusieurs signaux de domaine temporel.

Acquiring one or more time-domain signals corresponding to one or more frequency-domain signals except primary synchronization frequency-domain signals ⟋ S102

Determining one primary synchronization time-domain signal in at least two pre-stored primary synchronization time-domain signals and performing weighted processing on the determined primary synchronization time-domain signal ⟋ S104

Sending a signal which is obtained by adding the weighted primary synchronization time-domain signal and the one or more time-domain signals ⟋ S106

**Fig. 1**

Acquisition component 22

Weighted processing component 24

Sending component 26

**Fig. 2**

Acquisition component 22

Acquisition sub-component 32

Weighted processing component 24

Sending component 26

**Fig. 3**

Acquisition component
22

Conversion component
42

Storage component 44

Weighted processing
component 24

Sending component 26

**Fig. 4**

Acquisition component 22

Weighted processing
component 24

Weighted processing
sub-component 52

Sending component 26

**Fig. 5**

Acquisition component 22

Weighted processing component 24

Weighted processing sub-
component 52

Processing element 62

Sending component 26

**Fig. 6**

Starting

Locally storing synchronization
time-domain signals — S702

The system generating one or more
physical signals except the
synchronization signals — S704

Selecting one local synchronization
signal according to a cell ID, and
performing weighted processing — S706

Superposing the synchronization
signal and the one or more physical
channel signals in the time domain — S708

**Fig. 7**

Processor 822

Storage unit 824

Computer system 82

**Fig. 8**

Storage region 92 for primary synchronization time-domain signals

Primary synchronization signal weighted processing component 93

Parameter parsing component 91

Traffic channel/ control channel generation compoenent94

IFFT componen t 95

Time-domain signal superposing component 96

IQ platfor m 97

**Fig. 9**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1892865 A1

- WO 2015058539 A1